# EUROPÄISCHE PATENTSCHRIFT

(11) **EP 3 135 879 B1**
(45) Veröffentlichungstag und Bekanntmachung des Hinweises auf die Patenterteilung: **24.03.2021**
(21) Anmeldenummer: 16001581.4
(22) Anmeldetag: 15.07.2016
(51) Int. Cl.: F01P 5/06, F01P 11/10

(54) **BYPASS-EINRICHTUNG ZUR REDUZIERUNG EINER REZIRKULATION ERWÄRMTER LUFT IN EINE KÜHLEINRICHTUNG**
BYPASS DEVICE FOR REDUCING RECIRCULATION OF HEATED AIR INTO A COOLING DEVICE
DISPOSITIF DE DERIVATION DESTINE A REDUIRE UNE RECIRCULATION D'AIR CHAUFFE DANS UN DISPOSITIF DE REFROIDISSEMENT

(30) Priorität: 26.08.2015 DE 102015011192
(43) Veröffentlichungstag der Anmeldung: 01.03.2017
(73) Patentinhaber: MAN Truck & Bus SE, 80995 München (DE)
(72) Erfinder: Ganis, Maximilian Ludwig, 80796 München (DE); Kopp, Roland, 81373 München (DE)
(74) Vertreter: v. Bezold & Partner Patentanwälte - PartG mbB

(56) Entgegenhaltungen:
- EP-A1- 0 675 268
- WO-A1-2008/111906
- DE-A1-102011 121 624
- DE-A1-102013 000 813

## Beschreibung

Die Erfindung betrifft ein Kraftfahrzeug mit einer Vorrichtung zur Kühlung einer Antriebseinrichtung des Kraftfahrzeugs.

Im Stand der Technik sind bereits eine Vielzahl von Vorrichtungen zur Kühlung von Kraftfahrzeug-Verbrennungsmotoren bekannt. Die Vorrichtungen umfassen üblicherweise eine in einer Durchströmrichtung luftdurchströmbare Kühleinrichtung, eine Nachleiteinrichtung und eine Lüftereinrichtung. Problematisch dabei ist, dass meist ein Teil der durch die Kühleinrichtung und in der Folge durch den Verbrennungsmotor erwärmten Luft zur Kühleinrichtung zurückströmt und von der Kühleinrichtung angesaugt und erwärmt wird. Die Rückströmung von durch die Kühleinrichtung und den Verbrennungsmotor erwärmte Luft führt zu einer deutlichen Reduzierung des Wirkungsgrades der Kühleinrichtung. DE 10 2011 121 624 A1 offenbart eine Vorrichtung zur Positionierung stromaufwärts einer Antriebseinrichtung eines Kraftfahrzeugs und insbesondere zur Kühlluftbeaufschlagung derselben. Die Vorrichtung umfasst eine Lüftereinrichtung und einen Nachleitapparat, der eine Vielzahl von Luftleitschaufeln aufweist, die so ausgebildet sind, dass sie einen von der Lüftereinrichtung ausgegebenen Luftstrom weiterleiten. WO 2008/111906 A1, EP 0 675 268 A1 und DE 10 2013 000 813 A1 offenbaren ebenfalls eine Vorrichtung zur Kühlung einer Antriebsvorrichtung.

Eine Aufgabe der Erfindung ist es, eine Möglichkeit zu schaffen, mittels der eine durch Rückströmung erwärmter Luft verursachte Wirkungsgradverringerung einer Kühleinrichtung reduziert oder sogar vermieden werden kann.

Diese Aufgabe wird mit den Merkmalen des Hauptanspruchs gelöst. Vorteilhafte Weiterbildungen der Erfindung können den Unteransprüchen und der folgenden Beschreibung bevorzugter Ausführungsformen der Erfindung entnommen werden.

Die Erfindung schafft eine Vorrichtung zur Kühlung einer Antriebseinrichtung, nämlich einem Verbrennungsmotor, des Kraftfahrzeugs. Das Kraftfahrzeug kann ein Personenkraftwagen oder ein Nutzfahrzeug sein, insbesondere ein Lastkraftwagen oder ein Omnibus. Die Kühlung der Antriebseinrichtung erfolgt mittels eines Kühlluftstroms aus der Lüftereinrichtung und mittels eines durch die Kühleinrichtung kühlbaren Kühlmediums, wie z. B. Kühlwasser, Öl, etc..

Die Vorrichtung umfasst eine in einer Durchströmrichtung luftdurchströmbare Kühleinrichtung (z. B. einen Wärmetauscher), eine Lüftereinrichtung (z. B. einen Ventilator) und eine Nachleiteinrichtung (z. B. eine Lüfterhaube), die zweckmäßig zwischen der Kühleinrichtung und der Lüftereinrichtung angeordnet ist. Die Nachleiteinrichtung und/oder die Lüftereinrichtung sind zweckmäßig ebenfalls in der Durchströmrichtung luftdurchströmbar.

Die Vorrichtung zeichnet sich dadurch aus, dass sie eine Bypass-Einrichtung umfasst, um von der Kühleinrichtung und/oder der Antriebseinrichtung erwärmte, insbesondere in einer Rückströmrichtung rückströmende Luft durch von der Lüftereinrichtung erzeugten Unterdruck abzusaugen, so dass erwärmte Luft daran gehindert wird, durch die Kühleinrichtung gesaugt zu werden.

Dadurch wird ermöglicht, dass die Luft nicht weiter aufgeheizt wird, da sie nicht fortwährend bzw. mehrmals durch die Kühleinrichtung gesaugt wird. Ebenfalls kann die Kühleinrichtung mit kühlerer Luft dort durchströmt werden, wo ansonsten rückströmende erwärmte Luft durchströmt. Dadurch kann durchschnittlich mehr frische und/oder kühle Luft durch die Kühlleinrichtung strömen. Der höhere Temperaturunterschied führt zu einer Leistungssteigerung der Kühleinrichtung.

Die Bypass-Einrichtung dient zur Verhinderung der Rezirkulation bzw. Rückströmung von durch die Kühleinrichtung und die Antriebseinrichtung erwärmter Luft in die Kühleinrichtung. Durch die Bypass-Einrichtung wird ermöglicht, dass von der Kühleinrichtung und der Antriebseinrichtung erwärmte Luft nicht nochmals durch die Kühleinrichtung gesaugt und in der Folge weiter erwärmt wird. Somit kann z. B. die Motorraumtemperatur gesenkt und die Kühlleistung der Kühleinrichtung gesteigert werden.

Es ist möglich, dass die Bypass-Einrichtung ausgebildet ist, um von der Kühleinrichtung und/oder der Antriebseinrichtung erwärmte, rückströmende Luft mittelbar oder unmittelbar zur Lüftereinrichtung zu führen.

Die Bypass-Einrichtung kann z. B. innen durch die Nachleiteinrichtung führen und/oder durch die Nachleiteinrichtung ausgebildet werden.

Die Bypass-Einrichtung kann des Weiteren z. B. außen an der Nachleiteinrichtung entlang geführt sein und z. B. zumindest ein Rohr, Schlauch oder ein anderes kanalerzeugendes Teil umfassen.

Die Bypass-Einrichtung weist eine Einlassöffnung für von der Kühleinrichtung und/oder der Antriebseinrichtung erwärmte rückströmende Luft auf.

Die Nachleiteinrichtung ragt über den Außenumfang der Kühleinrichtung z. B. radial hinaus, um die Einlassöffnung zu bilden.

Die Einlassöffnung kann sich z. B. oberhalb, unterhalb und/oder seitlich der Kühleinrichtung und/oder der Nachleiteinrichtung erstrecken.

Die Einlassöffnung kann z. B. in die Nachleiteinrichtung hineinführen und/oder durch die Rückseite der Nachleiteinrichtung gebildet werden, so dass z. B. von der Kühleinrichtung und/oder der Antriebseinrichtung erwärmte, rückströmende Luft entlang des Außenumfangs der Nachleiteinrichtung strömbar ist, um mittels eines Richtungswechsels, z. B. um über 90°, über 120°, über 160° oder um im Wesentlichen 180° in die Bypass-Einrichtung zu gelangen. Alternativ oder ergänzend kann die Einlassöffnung relativ zur Durchströmrichtung vor der Lüftereinrichtung ausgebildet sein.

Die Einlassöffnung erstreckt sich über die gesamte Breite und/oder Höhe der Kühleinrichtung und der Nachleiteinrichtung.

Die Einlassöffnung kann entgegengesetzt zur Durchströmrichtung ausgerichtet sein, so dass sie insbesondere zur Lufteinlassseite der Kühleinrichtung weisen kann.

Es ist möglich, dass die Einlassöffnung ausgebildet ist, um von der Kühleinrichtung und/oder der Antriebseinrichtung erwärmte, rückströmende Luft in die Nachleiteinrichtung zu führen, so dass sie in der Nachleiteinrichtung mit Luft aus der Kühleinrichtung zusammentrifft, insbesondere in Verbindung gebracht wird und/oder zumindest teilweise vermischt wird.

Die Bypass-Einrichtung kann z. B. relativ zur Durchströmrichtung schräg und/oder von außen nach innen (z. B. von oben nach unten, von unten nach oben, von seitlich außen nach seitlich innen, etc.) verlaufen, um von der Kühleinrichtung und/oder der Antriebseinrichtung erwärmte, rückströmende Luft mittelbar oder unmittelbar zur Lüftereinrichtung zu führen.

Es ist möglich, dass die Nachleiteinrichtung als Lüfterhaube ausgeführt ist-. Die Nachleiteinrichtung verjüngt sich mittels eines Verjüngungsbereichs zur Lüftereinrichtung hin, wobei vorzugsweise der Verjüngungsbereich zweckmäßig zumindest einen Teil der Bypass-Einrichtung bilden kann.

Der Unterdruck in der Nachleiteinrichtung ist vorzugsweise durch Rotation mittels Ventilatorblättern der Lüftereinrichtung erzeugbar.

Zu erwähnen ist, dass die Lüftereinrichtung zweckmäßig ausgebildet ist, um Luft durch die Kühleinrichtung zu saugen.

Zu erwähnen ist noch, dass die Nachleiteinrichtung zweckmäßig als Nachleitgehäuse, insbesondere Lüfterhaube ausgeführt sein kann.

Zu erwähnen ist außerdem, dass die erwärmte, rückströmende Luft z. B. aus einem Motorraum der Antriebseinrichtung stammen kann.

Zu erwähnen ist darüber hinaus, dass die Einlassöffnung der Bypass-Einrichtung relativ zur Durchströmungsrichtung z. B. vor, hinter, über, unter und/oder seitlich der Kühleinrichtung angeordnet sein kann.

Die Kühleinrichtung ist als Wärmetauscher ausgeführt, der durchfließendes Verbrennungsmotor-Kühl-Medium (z. B. Kühlwasser, Öl, etc.) mit der durchströmenden Luft abkühlt. Durch den Temperaturunterschied des Mediums zur Luft wird das Temperaturpotential übergeben, sodass das Medium abkühlt und die Luft sich erwärmt. Die Luft wird somit meist bereits mit einer sehr hohen Temperatur zur Antriebseinrichtung, insbesondere in den Motorraum, geblasen. Zudem wirkt die erwärmte Luft z. B. auch noch als Kühlung von Bauteilen im Motorraum, wie z. B. Abgastopf und Motor. Jedoch ist die Erwärmung der Luft durch diese Bauteile meist nur gering, denn die meiste Aufheizung erfährt die Luft innerhalb der Kühleinrichtung. Die Kühlung des Verbrennungsmotors erfolgt zweckmäßig intern über das Medium.

Die Erfindung betrifft ein Kraftfahrzeug, z. B. einen Personenkraftwagen oder ein Nutzfahrzeug, insbesondere einen Omnibus oder einen Lastkraftwagen, mit einer Vorrichtung wie hierin offenbart.
- Figur 1: zeigt eine Ansicht einer Vorrichtung gemäß einer Ausführungsform der Erfindung,
- Figur 2: zeigt eine perspektivische Ansicht der Vorrichtung der Figur 1 und
- Figur 3: zeigt eine Ansicht einer Vorrichtung gemäß einer anderen Ausführungsform der Erfindung.

Die in den Figuren gezeigten Ausführungsformen stimmen teilweise überein, so dass für gleiche oder ähnliche Teile die gleichen Bezugszeichen verwendet sind und zu deren Erläuterung auch auf die Beschreibung der anderen Ausführungsformen verwiesen wird, um Wiederholungen zu vermeiden.

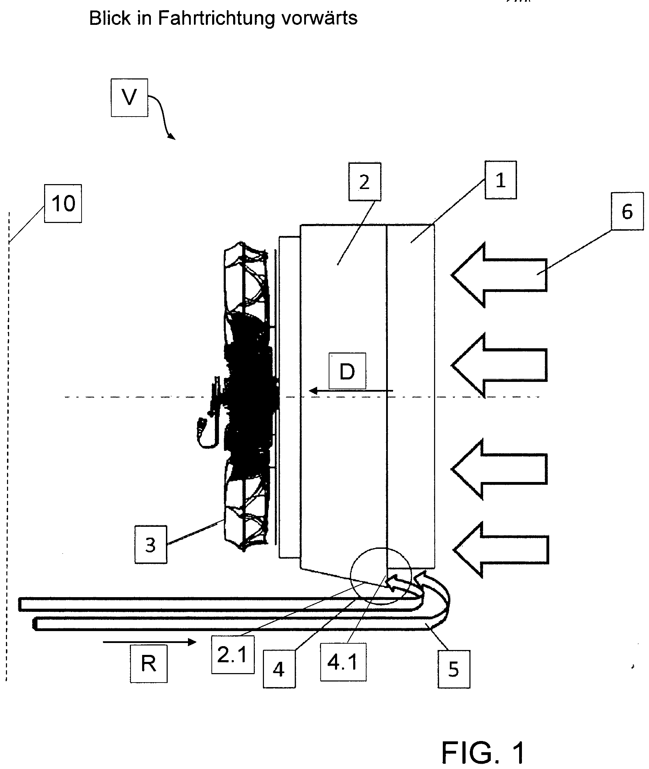

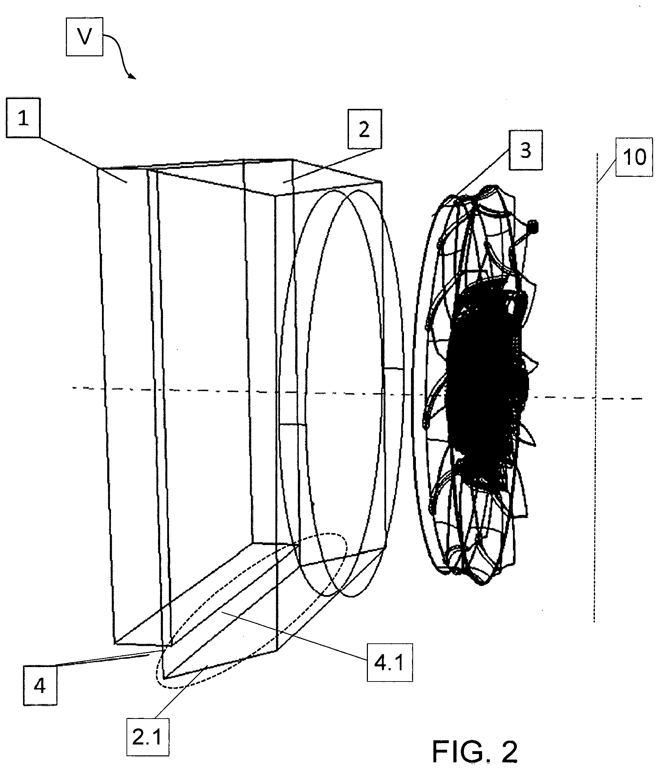

Figur 1 zeigt eine Ansicht einer Vorrichtung V gemäß einer Ausführungsform der Erfindung, während Figur 2 eine zugehörige perspektivische Ansicht zeigt. Die Vorrichtung V wird nachfolgend unter gemeinsamer Bezugnahme auf die Figuren 1 und 2 beschrieben.

Die Vorrichtung V dient zur Positionierung stromaufwärts einer nur schematisch dargestellten Antriebseinrichtung 10, z. B. eines Verbrennungsmotors, für ein Kraftfahrzeug.

Die Vorrichtung V umfasst eine Kühleinrichtung 1 (z. B. einen Wärmetauscher), eine Nachleiteinrichtung (z. B. eine Lüfterhaube) 2 und eine Lüftereinrichtung (z. B. eine Ventilatoreinrichtung) 3. Die Kühlereinrichtung 1, die Nachleiteinrichtung 2 und die Lüftereinrichtung 3 sind zweckmäßig in einer Durchströmungsrichtung D luftduchströmbar. Bezugszeichen 6 kennzeichnet kühle, frische Außenluft, die mittels der Lüftereinrichtung 3 in die Kühleinrichtung 1 gesaugt wird, um dort Kühlmedium für die Antriebseinrichtung 10 zu kühlen.

Die Kühleinrichtung 1 dient zweckmäßig dazu, durch die Kühleinrichtung 1 fließendes Kühlmedium (z. B. Kühlwasser, Öl, etc.) mit der durchströmenden Luft 6 abzukühlen. Durch den Temperaturunterschied des Mediums zur Luft wird das Temperaturpotential übergeben, sodass das Medium abkühlt und die Luft sich erwärmt. Die Luft wird somit meist bereits mit einer relativ hohen Temperatur zur Antriebseinrichtung 10, insbesondere in den Motorraum, geblasen. Zudem wirkt die erwärmte Luft z. B. auch noch als Kühlung für Bauteile im Motorraum, wie z. B. Abgastopf und Motor. Jedoch ist die Erwärmung der Luft durch diese Bauteile meist nur relativ gering, denn die meiste Aufheizung erfährt die Luft innerhalb der Kühleinrichtung 1. Die Kühlung der Antriebseinrichtung 10 erfolgt zweckmäßig intern über das Kühlmedium.

Die Vorrichtung V weist eine Bypass-Einrichtung 4 auf, um von der Kühleinrichtung 1 und zumindest geringfügig der Antriebseinrichtung 10 erwärmte, in einer Rückströmrichtung R rückströmende Luft 5 durch von der Lüftereinrichtung 3 erzeugten Unterdruck in die Nachleiteinrichtung 2 abzusaugen und somit die erwärmte, rückströmende Luft 5 zumindest teilweise, vorzugsweise im Wesentlichen gänzlich daran zu hindern, durch die Kühleinrichtung 1 gesaugt zu werden. Die Bypass-Einrichtung 4 reduziert und/oder verhindert folglich die Rezirkulation, also die Rückströmung von durch die Kühleinrichtung 1 und die Antriebseinrichtung 10 erwärmte Luft 5 in die Kühleinrichtung 1.

Mittels der Bypass-Einrichtung 4 wird folglich erwärmte Luft 5 nicht nochmals durch die Kühleinrichtung 1 gesaugt und quasi immer weiter erwärmt. Somit kann die Temperatur insbesondere im Motorraum gesenkt und die Kühlleistung der Kühleinrichtung 1 gesteigert werden.

Die Bypass-Einrichtung 4 ist ausgebildet, um die erwärmte Luft 5 zur Lüftereinrichtung 3 zu führen.

Die Bypasseinrichtung 4 verläuft innen durch die Nachleiteinrichtung 2 und wird durch die Nachleiteinrichtung 2 selbst gebildet. Alternativ oder ergänzend ist es allerdings möglich, dass die Bypass-Einrichtung 4 z. B. außen an der Nachleiteinrichtung 2 entlang geführt ist, z. B. mittels eines oder mehreren Rohren, Schläuchen oder anderen kanalerzeugenden Teilen. Es ist möglich, die Luft außen zu führen, jedoch muss die Luft vor der Lüftereinrichtung 3 eingeleitet werden, dass die Luft von der Lüftereinrichtung 3 angesaugt werden kann.

Die Bypass-Einrichtung 4 umfasst eine Einlassöffnung 4.1, über die erwärmte, rückströmende Luft 5 in die Nachleiteinrichtung 2 führbar ist. Die Einlassöffnung 4.1 ist vorzugsweise unter der Kühleinrichtung 1 angeordnet, kann aber auch seitlich oder über der Kühleinrichtung 4.1 angeordnet sein.

Die Einlassöffnung 4.1 kann insbesondere dadurch gebildet werden, dass die Nachleiteinrichtung 2 über den Außenumfang der Kühleinrichtung 1 hinausragt. Die Einlassöffnung 4.1 kann zweckmäßig durch die Rückseite der Nachleiteinrichtung 2 gebildet werden und kann zweckmäßig in die Nachleiteinrichtung 2 hineinführen. Die Einlassöffnung 4.1 ist vorzugsweise entgegengesetzt zur Durchströmrichtung D ausgerichtet, weist also in Figur 1 nach rechts. Die Einlassöffnung 4.1 ist ausgebildet, um erwärmte, rückströmende Luft 5 in die Nachleiteinrichtung 2 zu führen, so dass die erwärmte, rückströmende Luft 5 in der Nachleiteinrichtung 2 mit Luft aus der Kühleinrichtung 1 zusammentrifft, sich insbesondere zumindest teilweise vermischt. Die Vermischung muss allerdings nicht in der Nachleiteinrichtung 2 erfolgen. Die Luft kann auch separat aus der Nachleiteinrichtung 2 weggesaugt werden, z. B. über einen separaten Lüfter.

Durch die Bypass-Einrichtung 4 wird erwärmte Luft nicht nochmals durch die Kühleinrichtung 1 gesaugt und weiter erwärmt. Somit kann die Motorraumtemperatur gesenkt und die Kühlleistung gesteigert werden. Die Luft wird nicht weiter aufgeheizt, weil sie nicht mehrmals, insbesondere nicht fortwährend, durch die Kühleinrichtung 1 gesaugt wird. Die Kühleinrichtung 1 wird zudem mit kühlerer Luft dort durchströmt, wo sonst erwärmte, rückströmende Luft durchströmt. Dadurch kann durchschnittlich mehr kühle Luft in die Kühleinrichtung 1 strömen. Dieser höhere Temperaturunterschied führt zu einer Leistungssteigerung der Kühleinrichtung 1.

Die Bypass-Einrichtung 4 kann relativ zur Durchströmrichtung D schräg, insbesondere von außen nach innen verlaufen, um Luft von radial außerhalb der Lüftereinrichtung 3 hin zur Lüftereinrichtung 3 zu leiten. Hierzu kann die Nachleiteinrichtung 2 sich mittels eines Verjüngungsbereichs 2.1 zur Lüftereinrichtung 3 hin verjüngen, wobei der Verjüngungsbereich 2.1 zumindest einen Teil der Bypass-Einrichtung 4 bildet.

Figur 2 kann insbesondere entnommen werden, dass sich die Einlassöffnung 4.1 über die gesamte Breite der Kühleinrichtung 1 und der Nachleiteinrichtung 2 erstrecken kann. Alternativ oder ergänzend sind Ausführungsformen möglich, in den sich die Einlassöffnung 4.1 über die gesamte Höhe der Kühleinrichtung 1 und der Nachleiteinrichtung 2 erstrecken kann.

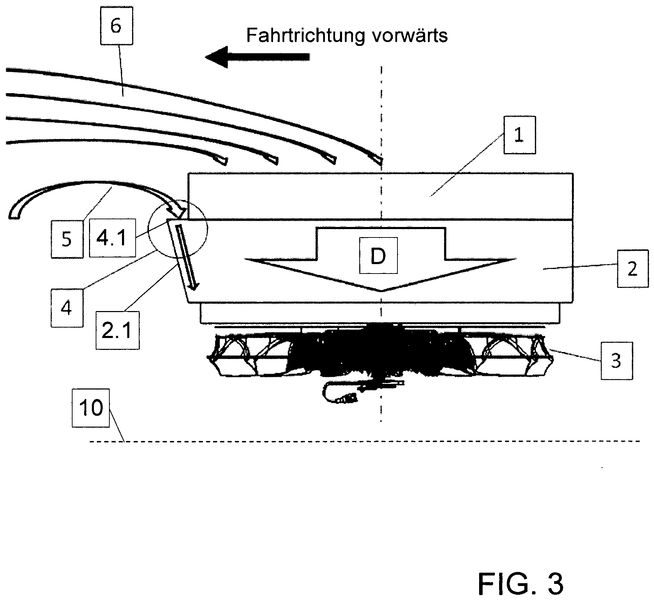

Figur 3 zeigt eine Ansicht einer Vorrichtung V gemäß einer anderen Ausführungsform der Erfindung.

Eine Besonderheit der in Figur 3 gezeigten Ausführungsform ist, dass sich die Einlassöffnung 4.1 der Bypass-Einrichtung 4 in Vorwärtsfahrtrichtung des Kraftfahrzeugs gesehen vor der Kühleinrichtung 1 befindet, insbesondere seitlich an der Kühleinrichtung 1 und/oder der Nachleiteinrichtung 2 ausgebildet ist.

Die Erfindung ist nicht auf die vorstehend beschriebenen bevorzugten Ausführungsbeispiele beschränkt.

### Bezugszeichenliste

- 1: Kühleinrichtung
- 2: Nachleiteinrichtung
- 2.1: Verjüngungsbereich
- 3: Lüftereinrichtung
- 4: Bypass-Einrichtung
- 4.1: Einlassöffnung der Bypass-Einrichtung
- 5: Erwärmte, rückströmende Luft
- 6: Außenluft
- 10: Antriebseinrichtung, nämlich Verbrennungsmotor
- D: Luftdurchströmungsrichtung der Kühleinrichtung, der Nachleiteinrichtung und/oder der Lüftereinrichtung
- R: Rückströmrichtung erwärmter Luft
- V: Vorrichtung

## Patentansprüche

1. Kraftfahrzeug mit einer Vorrichtung (V) zur Kühlung einer Antriebseinrichtung (10) des Kraftfahrzeugs, mit: einer in einer Durchströmrichtung (D) luftdurchströmbaren Kühleinrichtung (1), einer Nachleiteinrichtung (2), einer Lüftereinrichtung (3) und einer Antriebseinrichtung (10), nämlich einem Verbrennungsmotor, **dadurch gekennzeichnet, dass** die Vorrichtung (V) eine Bypass-Einrichtung (4) aufweist, um von der Kühleinrichtung (1) und/oder der Antriebseinrichtung (10) erwärmte, rückströmende Luft (5) durch von der Lüftereinrichtung (3) erzeugten Unterdruck abzusaugen, und somit erwärmte Luft (5) daran gehindert wird, durch die Kühleinrichtung (1) gesaugt zu werden, wobei die Bypass-Einrichtung (4) eine Einlassöffnung (4.1) für erwärmte Luft (5) aufweist, wobei die Nachleiteinrichtung (2) über den Außenumfang der Kühleinrichtung (1) hinausragt, um die Einlassöffnung (4.1) zu bilden, und wobei sich die Einlassöffnung (4.1) über die gesamte Breite und/oder Höhe der Kühleinrichtung (1) und Nachleiteinrichtung (2) erstreckt, und wobei die Nachleiteinrichtung (2) sich mittels eines Verjüngungsbereichs zur Lüftereinrichtung (3) hin verjüngt, wobei die Bypass-Einrichtung (4) zur Verhinderung einer Rezirkulation von durch die Kühleinrichtung (1) und die Antriebseinrichtung (10) erwärmter Luft in die Kühleinrichtung (1) dient, wobei die Kühleinrichtung (1) als Wärmetauscher ausgeführt ist, um durchfließendes Verbrennungsmotor-KühlMedium mit durchströmender Luft abzukühlen.

2. Kraftfahrzeug nach Anspruch 1, **dadurch gekennzeichnet, dass** die Bypass-Einrichtung (4) ausgebildet ist, um rückströmende Luft (5) zur Lüftereinrichtung (3) zu führen.

3. Kraftfahrzeug nach Anspruch 1 oder 2, **dadurch gekennzeichnet, dass** die Bypass-Einrichtung (4) zweckmäßig innen durch die Nachleiteinrichtung (2) führt und/oder durch die Nachleiteinrichtung (2) gebildet wird.

4. Kraftfahrzeug nach einem der vorhergehenden Ansprüche, **dadurch gekennzeichnet, dass** die Bypass-Einrichtung (4) außen an der Nachleiteinrichtung (2) entlang geführt ist.

5. Kraftfahrzeug nach einem der Ansprüche 1 bis 4, **dadurch gekennzeichnet, dass** die Einlassöffnung (4.1) durch die Rückseite der Nachleiteinrichtung (2) gebildet wird, in die Nachleiteinrichtung (2) hinein führt und/oder relativ zur Durchströmrichtung (D) vor der Lüftereinrichtung (3) ausgebildet ist.

6. Kraftfahrzeug nach einem der Ansprüche 1 bis 5, **dadurch gekennzeichnet, dass** die Einlassöffnung (4.1) entgegengesetzt zur Durchströmrichtung (D) ausgerichtet ist.

7. Kraftfahrzeug nach einem der Ansprüche 1 bis 6, **dadurch gekennzeichnet, dass** die Einlassöffnung (4.1) ausgebildet ist, um erwärmte Luft (5) in die Nachleiteinrichtung (2) zu führen, so dass sie in der Nachleiteinrichtung (2) mit Luft aus der Kühleinrichtung (1) zusammentrifft.

8. Kraftfahrzeug nach einem der Ansprüche 1 bis 7, **dadurch gekennzeichnet, dass** sich die Einlassöffnung (4.1) oberhalb, unterhalb und/oder seitlich der Kühleinrichtung (1) und/oder der Nachleiteinrichtung (2) erstreckt.

9. Kraftfahrzeug nach einem der vorhergehenden Ansprüche, **dadurch gekennzeichnet, dass** die Bypass-Einrichtung (4) relativ zur Durchströmrichtung (D) schräg und/oder von außen nach innen verläuft, um erwärmte Luft (5) zur Lüftereinrichtung (3) zu führen.

10. Kraftfahrzeug nach einem der vorhergehenden Ansprüche, **dadurch gekennzeichnet, dass** die Nachleiteinrichtung (2) als Lüfterhaube ausgeführt ist und sich mittels eines Verjüngungsbereichs (2.1) zur Lüftereinrichtung (3) hin verjüngt, wobei der Verjüngungsbereich (2.1) zumindest einen Teil der Bypass-Einrichtung (4) bildet.

11. Kraftfahrzeug nach einem der vorhergehenden Ansprüche, **dadurch gekennzeichnet, dass** der Unterdruck in der Nachleiteinrichtung (2) durch Rotation mittels Ventilatorblättern der Lüftereinrichtung (3) erzeugbar ist.

## Claims

1. A motor vehicle with an apparatus (V) for cooling a drive device (10) of the motor vehicle, with: a cooling device (1), through which air can flow in a throughflow direction (D), a redirection device (2), a fan device (3) and a drive device (10), namely an internal combustion engine, **characterized in that** the apparatus (V) has a bypass device (4), in order to suck in, by way of vacuum which is generated by the fan device (3), return-flow air (5) which is heated by the cooling device (1) and/or the drive device (10), and heated air (5) is thus prevented from being sucked through the cooling device (1), the bypass device (4) having an inlet opening (4.1) for heated air (5), the redirection device (2) protruding beyond the outer circumference of the cooling device (1), in order to form the inlet opening (4.1), and the inlet opening (4.1) extending over the entire width and/or height of the cooling device (1) and redirection device (2), and the redirection device (2) tapering by means of a tapered region towards the fan device (3), the bypass device (4) serving to prevent a recirculation of air which is heated by way of the cooling device (1) and the drive device (10) into the cooling device (1), the cooling device (1) being configured as a heat exchanger, in order to cool internal combustion engine cooling medium which flows through by way of air which flows through.

2. The motor vehicle according to Claim 1, **characterized in that** the bypass device (4) is configured to conduct return-flow air (5) to the fan device (3).

3. The motor vehicle according to Claim 1 or 2, **characterized in that** the bypass device (4) expediently leads on the inside through the redirection device (2) and/or is formed by way of the redirection device (2).

4. The motor vehicle according to one of the preceding claims, **characterized in that** the bypass device (4) is conducted on the outside along the redirection device (2) .

5. The motor vehicle according to one of Claims 1 to 4, **characterized in that** the inlet opening (4.1) is formed by way of the rear side of the redirection device (2), leads into the redirection device (2), and/or is configured upstream of the fan device (3) relative to the throughflow direction (D).

6. The motor vehicle according to one of Claims 1 to 5, **characterized in that** the inlet opening (4.1) is oriented in an opposed manner with respect to the throughflow direction (D).

7. The motor vehicle according to one of Claims 1 to 6, **characterized in that** the inlet opening (4.1) is configured to conduct heated air (5) into the redirection device (2), with the result that it meets air from the cooling device (1) in the redirection device (2).

8. The motor vehicle according to one of Claims 1 to 7, **characterized in that** the inlet opening (4.1) extends above, below and/or to the side of the cooling device (1) and/or the redirection device (2).

9. The motor vehicle according to one of the preceding claims, **characterized in that** the bypass device (4) runs obliquely and/or from the outside to the inside relative to the throughflow direction (D), in order to conduct heated air (5) to the fan device (3).

10. The motor vehicle according to one of the preceding claims, **characterized in that** the redirection device (2) is configured as a fan hood, and tapers by means of a tapered region (2.1) towards the fan device (3), the tapered region (2.1) forming at least one part of the bypass device (4).

11. The motor vehicle according to one of the preceding claims, **characterized in that** the negative pressure in the redirection device (2) can be generated by way of rotation by means of fan blades of the fan device (3).

## Revendications

1. Véhicule automobile pourvu d'un dispositif (V) de refroidissement d'un moyen d'entraînement (10) du véhicule automobile, ledit véhicule comprenant : un moyen de refroidissement (1) à travers lequel de l'air peut circuler dans un sens d'écoulement (D), un moyen de guidage aval (2), un moyen de ventilation (3) et un moyen d'entraînement (10), à savoir un moteur à combustion interne, **caractérisé en ce que** le dispositif (V) comporte un moyen de dérivation (4) destiné évacuer l'air de retour (5) chauffé par le moyen de refroidissement (1) et/ou le moyen d'entraînement (10) par pression négative générée par le moyen de ventilation (3), et l'air chauffé (5) est ainsi empêché d'être aspiré à travers le moyen de refroidissement (1), le moyen de dérivation (4) comportant une ouverture d'entrée (4.1) destinée à l'air chauffé (5), le moyen de guidage aval (2) faisant saillie de la circonférence extérieure du moyen de refroidissement (1) afin de former l'ouverture d'entrée (4.1), et l'ouverture d'entrée (4.1) s'étendant sur toute la largeur et/ou la hauteur du moyen de refroidissement (1) et du moyen de guidage aval (2), et le moyen de guidage aval (2) s'amincissant en direction du moyen de ventilation (3) à l'aide d'une région d'amincissement, le moyen de dérivation (4) servant à empêcher la recirculation de l'air, chauffé par le moyen de refroidissement (1) et le moyen d'entraînement (10), jusque dans le moyen de refroidissement (1), le moyen de refroidissement (1) étant réalisé sous la forme d'un échangeur de chaleur afin de refroidir le milieu de refroidissement du moteur à combustion interne qui le traverse avec l'air qui le traverse.

2. Véhicule automobile selon la revendication 1, **caractérisé en ce que** le moyen de dérivation (4) est conçu pour guider l'air de retour (5) en direction du moyen de ventilation (3).

3. Véhicule automobile selon la revendication 1 ou 2, **caractérisé en ce que** le moyen de dérivation (4) passe de manière appropriée intérieurement à travers le moyen de guidage aval (2) et/ou est formé par le moyen de guidage aval (2).

4. Véhicule automobile selon l'une des revendications précédentes, **caractérisé en ce que** le moyen de dérivation (4) est guidé extérieurement le long du moyen de guidage (2).

5. Véhicule automobile selon l'une des revendications 1 à 4, **caractérisé en ce que** l'ouverture d'entrée (4.1) est ménagée à travers le côté arrière du moyen de guidage aval (2), débouche dans le moyen de guidage aval (2) et/ou est réalisée en amont d'un moyen de ventilation (3) relativement au sens d'écoulement (D).

6. Véhicule automobile selon l'une des revendications 1 à 5, **caractérisé en ce que** l'ouverture d'entrée (4.1) est orientée dans la direction opposée au sens d'écoulement (D).

7. Véhicule automobile selon l'une des revendications 1 à 6, **caractérisé en ce que** l'ouverture d'entrée (4.1) est conçue pour guider l'air chauffé (5) jusque dans le moyen de guidage aval (2) de façon à coïncider avec l'air, provenant du moyen de refroidissement (1), dans le moyen de guidage aval (2).

8. Véhicule automobile selon l'une des revendications 1 à 7, **caractérisé en ce que** l'ouverture d'entrée (4.1) s'étend au-dessus, au-dessous et/ou sur le côté du moyen de refroidissement (1) et/ou du moyen de guidage aval (2).

9. Véhicule automobile selon l'une des revendications précédentes, **caractérisé en ce que** le moyen de dérivation (4) s'étend obliquement et/ou de l'extérieur vers l'intérieur relativement au sens d'écoulement (D) pour guider l'air chauffé (5) en direction du moyen de ventilation (3).

10. Véhicule automobile selon l'une des revendications précédentes, **caractérisé en ce que** le moyen de guidage aval (2) est réalisé sous la forme d'un capot de ventilateur et s'amincit en direction du moyen de ventilation (3) à l'aide d'une région d'amincissement (2.1), la région d'amincissement (2.1) formant au moins une partie du moyen de dérivation (4).

11. Véhicule automobile selon l'une des revendications précédentes, **caractérisé en ce que** la pression négative dans le moyen de guidage aval (2) peut être générée par rotation au moyen de pales de ventilateur du moyen de ventilation (3).
